# EUROPEAN PATENT APPLICATION

(11) **EP 2 778 591 A2**
(43) Date of publication of application: **17.09.2014**
(21) Application number: 14159120.6
(22) Date of filing: 12.03.2014
(51) Int. Cl.: F28D 21/00, F01K 23/10, F02C 6/18, F28F 3/04, F28F 21/08, F28D 9/00

(54) **Combined heat and power (chp) system**

(30) Priority: 12.03.2013 NL 2010441
(71) Applicant: Dejatech Holding B.V., 5951 DB Belfeld (NL)
(72) Inventor: Deckers, Jan Hubertus, 5951 DB Belfeld (NL); Thijssen, Paulus Mathijs Maria, 5951 DB Belfeld (NL)
(74) Representative: Jansen, Cornelis Marinus

(57) **Abstract**

Combined Heat and Power (CHP) system (100), comprising an engine or turbine (104), a generator (105) and a heat exchanger (1), wherein the heat exchanger (1) has at least one flue duct (6) in fluid communication with an exhaust (106) of the engine or turbine (104) and at least one fluid duct, the heat exchanger (1) arranged for exchange of heat between flue gasses flowing through the at least one flue duct (6) and a fluid flowing through said at least one fluid duct (7), wherein the at least one flue duct (6) is formed by at least extrusion.

## Description

The invention relates to a combined heat and power (CHP) system. Such systems are known in the art and combine an engine or turbine with a generator for generator electricity and with a heat exchanger for generating heated fluid, especially water for for example industrial or household use. Such water can for example be used for space heating, for tap water or for generating industrial heat for use in for example industrial processes.

CHP systems are known comprising a heat exchanger made by casting or moulding from for example light metal, such as aluminium or aluminium alloy, such as for example disclosed in EP1752647, which has a standard heat exchanger of a central heating system integrated with a Stirling motor. The heat exchanger is cast from aluminium and has a gas flow duct filled with heat exchanging surface increasing elements. The heat exchanger is arranged such that the main flow direction of the gasses through the gas flow duct is mainly vertical. Exhaust gas from the Stirling motor is fed up through a hollow core of the heat exchanger and then out into the gas duct, to be taken along down through the gas duct and out through an exhaust.

In alternative CHP systems a standard, monoblock aluminium cast heat exchanger is used, such as for example an Alutop® heat exchanger, offered by Bekaert BvbA, Belgium, which is lied in a horizontal position. An exhaust pipe of a motor or turbine of the CHP is connected to the inlet space of the heat exchanger, such that flue gasses from the motor or turbine flow substantially horizontally through the flue gas duct of the heat exchanger, exchanging heat with water flowing through the water duct of the heat exchanger.

In these CHP systems problems occur with the heat exchangers due to contamination carried in the exhaust gas from the turbine or engine. These contaminations can be solid particles, such as soot, but can also be fluid, such as oil. Such contamination does get stuck inside the heat exchanger, especially in the flue duct or ducts, resulting in for example reduced efficiency of the heat exchanger, increased exhaust of small particles by the exhaust and contamination of for example filters and catalysts. These known heat exchangers cannot be cleaned properly, which means that the heat exchangers have to be replaced relatively regularly, which is costly and time consuming. Moreover, this reduces the environmental advantages that are strived for by a CHP.

US5473884 discloses a CHP system in which gas from a small gas turbine is fed passed a gas burner into a gas channel and through two series of parallel pipes extending through a tank of water for exchanging heat. These pipes will be made of stainless steel and extend substantially horizontally. Due to the straight pipes made of stainless steel, contamination by small particles and for example oil may be less of a problem then in cast aluminium heat exchangers, but such heat exchanger does not allow for cleaning in an easy manner either, without having to dismantle most of the heat exchanger. Moreover, such CHP and especially the construction of the heat exchanger is very costly due to inter alia the metal used, and the necessity of welding all pipes and other parts together, water and gas tight.

The present disclosure aims at an alternative CHP system. The present disclosure also aims at a CHP system which avoids or mitigates at least one or some of the problems of the known CHP systems as discussed in the introduction to this specification here above. The present disclosure furthermore or alternatively aims at a CHP system which is highly reliable and efficient, easy to maintain and/or less prone to contamination than the systems according to the prior art.

At least one of the aims and other advantages can be obtained with an CHP system according to this disclosure.

In a first aspect an CHP system of the present invention can be characterized in that it comprising an engine or turbine, a generator and a heat exchanger, wherein the heat exchanger has at least one flue duct in fluid communication with an exhaust of the engine or turbine and at least one fluid duct. The heat exchanger is arranged for exchange of heat between flue gasses flowing through the at least one flue duct and a fluid flowing through said at least one fluid duct. According to this aspect of the disclosure the at least one flue duct is formed by at least extrusion.

In preferred embodiments the heat exchanger of the CHP has a heat exchanger body comprising said at least one flue duct or at least the major part thereof, and preferably also the said at least one fluid duct, or again at least the major part thereof, wherein the body is made substantially by extrusion and/or by assembling parts made by extrusion, wherein the said at least one flue duct has a main direction of flow parallel to the extrusion direction of the body or the extruded parts thereof.

In a further aspect the heat exchanger can be made using light metal or light metal alloy, such as aluminium or aluminium alloy. Light metal is considered to be non-ferro metal having a density of less than about 4500 kg/m³. Preferred metal is aluminium or aluminium alloy in a extrusionable grade.

In another aspect the heat exchanger of the CHP can comprise a body and end elements, wherein the body comprises a series of flue duct sections, extending parallel to each other and connected at, in and/or near the end elements, for example by removing part of a wall between such sections and/or by duct parts formed in or by the end elements. Preferably similarly the or each water duct is in part formed in the body, by a series of parallel duct sections, connected in, at or near the end elements. The body can be made from one extruded element or by a series of interconnected extruded elements.

In another aspect a heat exchanger of the CHP can be made such that the at least one the flue duct is defined by flue duct defining walls which have a surface roughness of less than about 25Ra, preferably less than 12.5Ra, more preferably less than 6Ra, even more preferably less than 2Ra. The roughness can be 1Ra or lower, for example 0.8Ra or lower. By using extrusion for forming said duct defining walls such surface roughness is obtainable without the necessity of additional machining.

In another aspect a heat exchanger of a CHP can be provided with at least one closable opening into said at least one flue duct, for cleaning of the flue duct.

The present invention shall be further elucidated in the following description, with reference to the drawings, in which:
Fig. 1 shows in perspective view a CHP system is shown, without attached heating circuits;
Fig. 2 shows schematically a flow diagram of a CHP system with connected thereto an additional heating boiler and heating circuits;
Fig. 3 shows a heat exchanger, schematically, in perspective view;
Fig. 4 in perspective view a part of a heat exchanger, shown generally from a first side;
Fig. 5 in perspective view a part of a heat exchanger, shown generally from an opposite side;
Fig. 6 a partly assembled heat exchanger from a first end;
Fig. 7 a first part of a heat exchanger in a side view;
Fig. 8 a second part of a heat exchanger in a side view;
Fig. 9 in perspective view a partly assembled heat exchanger from a second side;
Fig. 10 a heat exchanger of fig. 9, with a mounted end plate;
Fig. 11 a heat exchanger of fig. 9 and 10, from an opposite end;
Fig. 12 schematically a gas flow path of a heat exchanger according to the present disclosure;
Fig. 13 schematically a water flow path of a heat exchanger according to the present disclosure;
Fig. 14 in perspective view schematically and enlarged part of a heat exchanger part;
Fig. 15A and B in frontal and side view a part of a heat exchanger part, in further detail; and
Fig. 16A and B in side view connecting parts of a heat exchanger part, in further detail.

In this description different embodiments of a CHP system and parts thereof are disclosed and described. Moreover, in this description different embodiments of heat exchangers and parts thereof for such CHP systems, as well as heating circuits equipped therewith are disclosed and described by way of example only. In these embodiments the same or similar parts have the same or similar reference signs. Combinations of parts of the embodiments shown are also considered to have been disclosed herein. In this description a heat exchanger as to be understood as an exchanger for exchanging heat between heated flue gasses from an engine or turbine and possibly additionally a burner and water flowing through one or more water channels within said heat exchanger. Such CHP systems are especially, but not exclusively suitable in domestic and commercial heating systems such as for sanitary (tap) water and central heating systems, such as for space heating and/or tap water heating systems.

In the following description extrusion, possibly combined with machining of extruded parts, shall be described as a means for manufacturing parts of a heat exchanger for such CHP system. Nevertheless, some or all of these parts can also be made by casting, such as but not limited to injection moulding, sand or otherwise lost core moulding or casting or the like, combined with machining, such as but not limited to grinding, turning, milling, drilling and the like known machining methods, in order to provide a desired surface roughness and configuration of at least flue duct or flue ducts in the heat exchanger.

It has been found that a major problem of heat exchangers of CHP systems made by casting, even if made from aluminium or an aluminium alloy is contamination. Surprisingly it has been found that surface roughness of walls of the gas ducts of the heat exchanger has a high impact on the contamination. Moreover, it has been found that not, at least not only solid particles such as soot is a major cause for contamination, but also oil originating from the engine or turbine, transferred to the heat exchanger by the exhaust gas. Contamination reduces the effectiveness of heat transfer and moreover leads to contamination of the exhaust gasses, for example by small particles. Moreover it reduces significantly the economical and technical lifespan of the heat exchanger. In stainless steel heat exchangers contamination has proven to be less of a problem, although they are mostly difficult to clean, but such heat exchangers are significantly more expensive. It has been found that extrusion of the gas ducts of a heat exchanger for a CHP system from light metal, such as aluminium or aluminium alloy, provides for the advantage that very little oil or other liquids will stick to the duct surfaces, whereas they can be made relatively cheaply.

It has been found surprisingly advantageous when the surface roughness of the said extruded ducts or at least walls hereof is kept low, especially well below about 25 Ra, such as less than 12.5Ra, more preferably less than 6Ra, even more preferably less than 2Ra. Preferably the surface roughness is less than 2 Ra, for example about 1 or 0.8 Ra or less. This is relatively easily achievable with extrusion of light metal, especially aluminium or aluminium alloy, without the necessity of further machining for reducing the surface roughness. Moreover it has been found that the extrusion process has the advantage that the surface hardness of the duct walls can be higher than when casting a similar heat exchanger. This appears to be also beneficial to reduction of contamination, even after a prolonged period of time of use.

The gas duct or gas ducts of the heat exchanger preferably are free of obstructions such as heat exchanging surface increasing elements, at least in the direction of flow of gas through said duct or ducts or at least parallel sections thereof. Surprisingly this will be beneficial to the heat exchanging characteristics of the heat exchanger, even though the heat transferring surface area compared to the overall volume of the heat exchanger is reduced and thus it would be expected that the heat transfer would be negatively influenced. Nevertheless a very highly efficient CHP has been obtained by using a heat exchanger according to the present disclosure, which moreover has a long economical and technical life span.

A heat exchanger can for example be according to WO2010/098666, wherein instead of a burner in a burner space the burner space is redefined as an inlet space to which an exhaust gas pipe coming from the engine or turbine is connected to said space as an inlet for said exhaust gas.

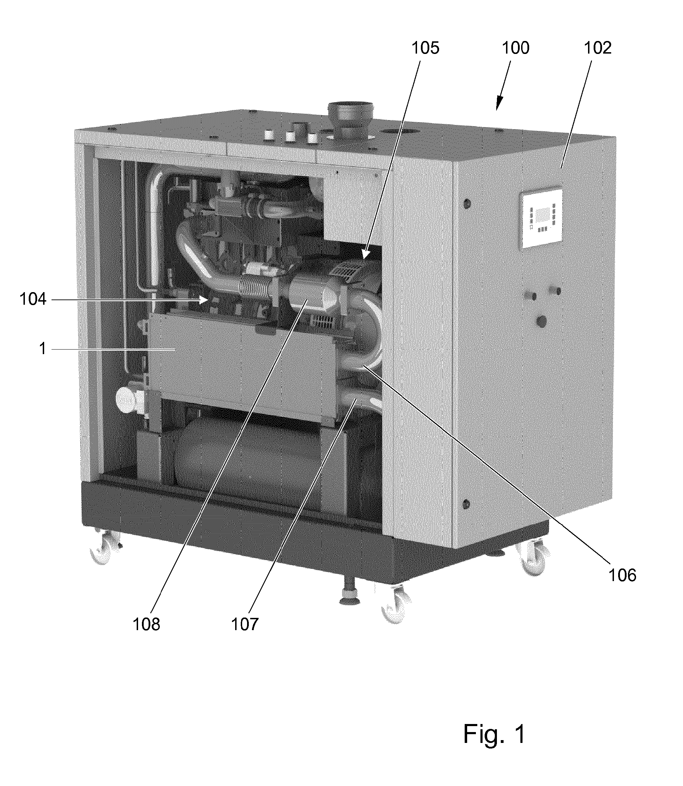

Fig. 1 shows schematically a CHP unit 100 of a CHP system 101, in perspective view with a partly taken away cover 102. This figure shows the unit 100 comprising an engine 104, for example a gas, diesel, petrol, bio fuel or gasoline driven engine, a Stirling type engine or any other suitable engine, such as a combustion engine. Alternatively the CHP unit can comprise a turbine, for example a gas turbine or other suitable type of turbine. The engine 104 or, alternatively, the turbine is coupled to a generator 105, such that the generator 105 can be driven by the engine or turbine for generating electricity.

The CHP unit 100 furthermore comprises a heat exchanger 1, connected to a exhaust outlet 106 of the engine or turbine 104, such that exhaust gasses from the engine or turbine 100 are fed into a flue duct 6 of the heat exchanger 1, from which they can be expelled through a gas outlet 107. A catalyst 108 can be included in the exhaust outlet 106 for cleaning at least part of the flue gasses, as is known from for example road car exhaust systems. A muffler 109 can be provided in the gas outlet, for example for providing back pressure and/or reducing noise.

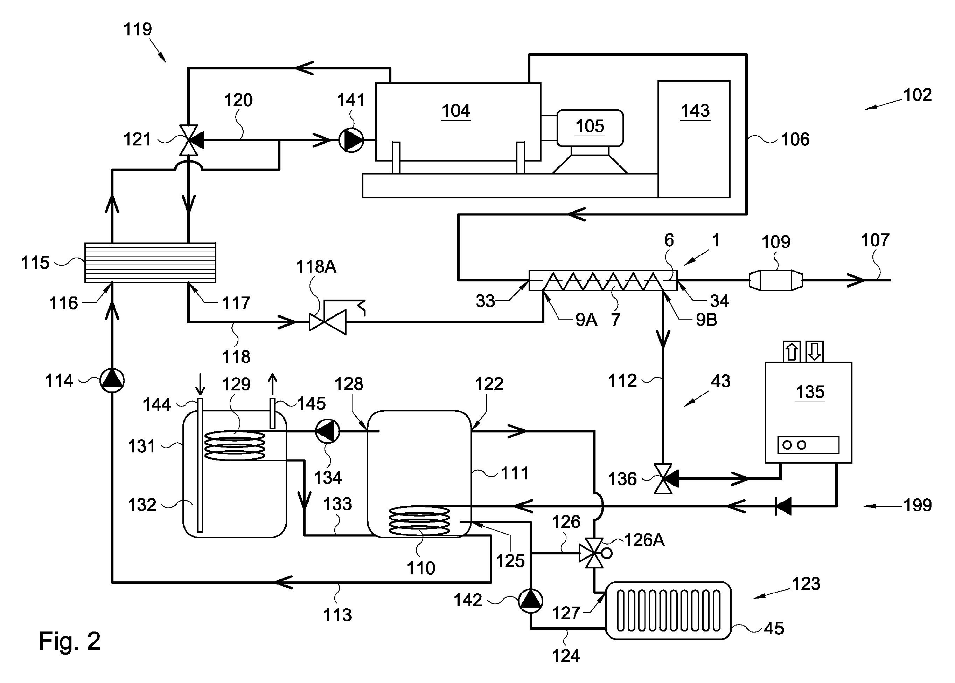

As can especially be seen in fig. 2 a water inlet and water outlet 9A, 9B can be provided of a water duct 7 for feeding water (or another fluidum to be heated) and exchanging heat with, especially receiving heat from exhaust gasses flowing through the flue duct or ducts 6.

Fig. 2 shows schematically a CHP system 101, comprising a CHP unit 100, connected to at least a heating circuit 199. The system 101 again comprises an engine or turbine 104, a generator 105 coupled thereto and a heat exchanger 1, coupled to the exhaust side of the engine or turbine 104 by the exhaust outlet 106. In the embodiment shown a turbine is shown, which can be a gas turbine 104. At least one flue duct 6 extends through the heat exchanger 1 from a gas inlet 33 to a gas outlet 34. A gas exhaust 107 with a muffler 109 is connected to the gas outlet 34. The or each flue duct 6 forms part of a gas side of the heat exchanger 1.

A heating circuitry 43 is connected to the or each water duct 7 of the heat exchanger 1, forming part of a water side of said heat exchanger 1. The water duct or ducts 7 have an outlet 9B which is connected to a heating element, such as a spiral 110 provided in a first water container 111, such as a vat for central heating water, by a first pipe 112. The element 110 is connected to a second pipe 113 which is connected through a first pump 114 to a first inlet 116 of a first flow side of a second heat exchanger 115, for example a plate heat exchanger or any other suitable type. A first outlet 117 of the same first flow side of the second heat exchanger 115 is connected, through a third pipe 118, to the inlet side 9A of the water duct or ducts 6 of the first heat exchanger 1. An overpressure release valve 118A can be provided in said circuitry 43, especially in said pipe 118. Thus water can be pumped through said circuitry 43, passing through the first and second heat exchangers 1, 115 and the heating element 110. In the first heat exchanger 1 during use heat can be transferred from hot exhaust gasses of the engine or turbine 104 and water flowing through the water duct or ducts 6.

A second flow side of the second heat exchanger 115 is further connected to a cooling circuit 119 for the engine or turbine 104, such that warm cooling fluid of the engine or turbine 104 can be fed through the second flow side of the second heat exchanger 115 for transferring heat from the cooling fluid to water flowing through the first flow side of said second heat exchanger 115. A short circuit line 120 can be provided in the cooling circuit 119, such that cooling fluid can be fed directly back into the cooling system of the engine or turbine 104, bypassing the second heat exchanger 115, for example when the temperature of the cooling fluid is below a pre set minimum value and/or the temperature of the water in the first flow side of the second heat exchanger is above a pre set value, or the temperature difference between the two is below a pre set value. This can for example be controlled by a thermostatic valve 121 provided in the circuit 119 or by other means. Thus, if desirable, water can be preheated by the cooling fluid inside the second heat exchanger 115, before being introduced into the water duct or ducts 6 of the first heat exchanger 1.

Within the first container 111 heat can be exchanged from the element 110 and water flowing there trough to water present inside the container 111 surrounding the element 110. The first container 111 comprises a first outlet 122 which is connected to an inlet 127 of a central heating system 123, in fig. 2 shown schematically by a radiator 45. Obviously such heating system 123 can be designed differently, for example with more radiators, convector elements, heat sinks or other heating means. Moreover more than one such heating circuits can be coupled to the container 111. A return line 124 of the heating system 123 is coupled to a first return inlet 125 of the first container 111. A short circuit line 126 can be provided for feeding part of the return water coming from the heating system 123 back into the inlet 127, without passing back into the container 111. A mixing three-way valve 126A can to that end be provided, for example temperature controlled or controlled by a controller.

The first container 11 is further provided in this embodiment with a second outlet 128, which feeds into a second heating element 129, for example a second spiral inside a second container 131, containing sanitary water 132. The second element 129 is connected to an outlet 133 feeding water back into the first container, for reheating. A second pump 134 can be provided for feeding water from the first container 111 through the second heating element 129. A sanitary water inlet 144 and sanitary water outlet 145 are provided for the second container 131, which can be connected to a sanitary water system (not shown) Alternatively these can be connected to an alternative heating system, for example for industrial heating.

The first and second containers can be used in combination or one or both can be omitted. A heating system 123 can for example be fed directly from the first heat exchanger 1. Sanitary water such as tap water can be heated differently, for example through a direct heat exchanger heated by flue gasses or water fed from the first heat exchanger.

In the embodiment shown as a further additional, optional feature a heating boiler 135 is provided, for example a central heating boiler as known in the art, which can for example be a gas operated central heating boiler. The boiler can for example be connected to the first pipe 112 through a three way valve 136 and to the first heating element 110, such that water coming from the first heat exchanger 111 is further heated by the heating boiler 135 before being fed into the heating element 110. This three way valve 136 can for example be a thermo operated valve, changing over when the water temperature in the first pipe 112 is below a pre set value, for example below about 80 °C.

In use the engine or turbine is driven, driving the generator for providing electrical energy or electricity. Alternatively the engine or turbine could be used for driving another piece of machinery. Hot exhaust gasses, for example of between 500 and 600 °C, for example about 560 °C are fed into the gas side of the first heat exchanger, into and through the or each flue duct 6. The exhaust gas is cooled down in side the first heat exchanger 1 to for example a temperature of below 100 °C, for example about 70 °C.

The heat from the exhaust gas is transferred to water pumped through the water side of the first heat exchanger 1, especially through the or each fluid duct 7. The water temperature will thereby be increased, for example to a temperature between 60 and 90 °C. Preferably the temperature is raised to a temperature above 80 °C. This heated water is then fed through the heating circuitry 43, especially through the element 110 and the second heat exchanger 115. In the second pipe 113 the water temperature may have been reduced, for example to about 60 °C or less. In the second heat exchanger the water temperature can then again be raised by heat absorption from the cooling fluid of the motor, if fed through the second heat exchanger 115.

Thus an energy friendly and effective system is obtained for generating both electricity and heat, wherein the heat can effectively be used for heating purposed, industrially and/or domestic.

Between for example the two heat exchangers 1, 115 a pressure relief valve 118A can be provided. A third pump 141 can be provided in the cooling circuit. A fourth pump 142 can be provided in the heating system 123, for example at the outlet side thereof.

A controller 143 can be provided for controlling the operation of the unit 100 in general, and of various components of the CPH system. For example the controller 143 can be designed for controlling the engine or turbine 104, the generator 105, the first, second, third and/or fourth pump, the optional boiler 135, the valve 126A and/or the three way valve 136.

A heat exchanger according 1 of a CHP system according to this disclosure can be as described hereafter.

In fig. 1 schematically a heat exchanger 1 is shown, in perspective view, generally from a second side. This heat exchanger 1 comprises a first part 2, a second part 3, a first end part 4 and a second end part 5. In a heat exchanger 1 according to this description at least one of the first and second parts 2, 3 and/or the first and second end parts 4, 5 can be made at least partly by extrusion. At least one of these parts 2, 3, 4, 5 is preferably made of light metal, such as aluminium, aluminium alloy, magnesium, magnesium alloy, or other metal. Preferably all parts 2, 3, 4, 5 are made at least partly by extrusion and at least partly of metal, preferably light metal. As indicated, light metal can be understood as at least including non-ferro metal having a density of 4500 kg/m³ or less.

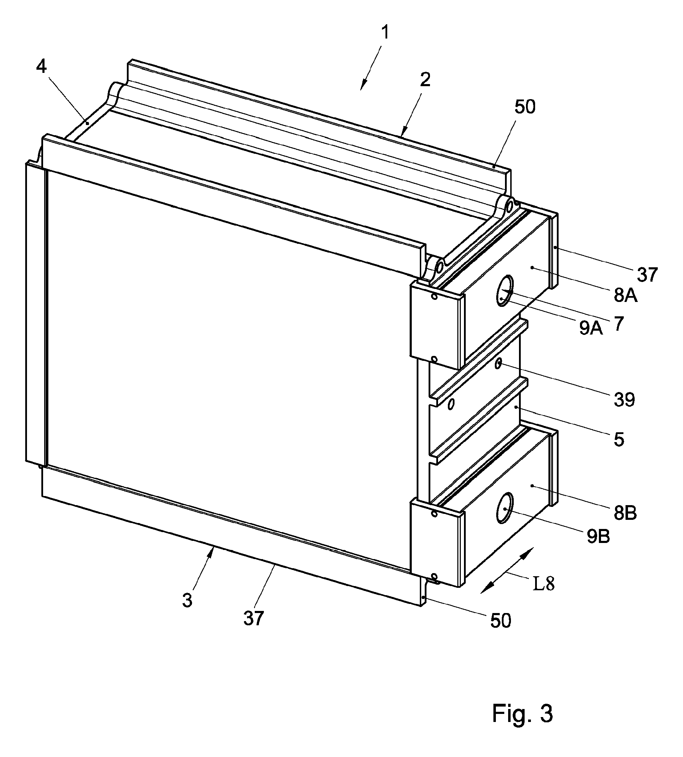

In the embodiments shown at least two of the first 2 and second part 3 and the first 4 and second end part 5 can be mutually bonded together for forming at least one of a gas flow space 6 and a water flow space 7. The gas flow space 6 and water flow space 7 can for example be formed by or comprise one or more channels or ducts, especially at least one gas duct 6 and at least one fluid duct 7, especially a water duct 7. The or each gas duct and/or the or each fluid duct can comprise a series of sections 30 A - (N), 24A - (N), wherein (N) can be any number, especially parallel sections, connected to each other for example in and/or by end pieces 5, for forming a meandering and/or zig-zag patterned duct. In the embodiment of fig. 3 the second end part 5 comprises a first and second channel part 8A, 8B, both having a length direction L₈. The length directions L₈ are in this embodiment parallel, such that the end part 5 can be extruded in the length direction L₈. In each of the channel parts 8A, 8B an opening 9A, 9B is provided, for example by drilling. Screw treads can be provided in the openings 9A, 9B in order to connect piping 118, 112 to these openings, as will be discussed later on. Other end parts and other types of connections of the piping are also possible.

In this description bonding has to be understood as forming an adhesive connection between two or more parts using an elastic bonding agent. Especially suitable is a glue or adhesive which after curing is still flexible and elastically deformable. Preferably the bonding agent is heat resistant to temperatures above 120°C, preferably above 150°C, more preferably above 170°C. A glue can be used having a temperature resistance up to 180°C or above. A glue can be used having a use temperature range between about -4 and +120 °C, preferably between about -20 and +150 °C, more preferably between about -40 and + 170 °C, even more preferably between at least -55 and 180 °C or higher (e.g. PSI S406). A temperature range should be understood as a range of temperatures in which the glue maintains at least most of its elastic and bonding properties, such that in a heat exchanger at least the bonding maintains pressure resistant and fluid and gas tight. Pressure resistant is in this context to be understood as at least resistant to pressures in an adjoining space of above 2 bar, preferably above 4 bar, more preferably at least to 10 bar. The desired pressure resistance can be as high as 20 bar or above. One bar is 100.000 Pascal or 0.1 MPa. Reference can be made to adhesion to peel, according to ASTM C794.

Elastic bonding agent, such as glue or adhesive should be understood as an agent which, after curing, has during use, a high yield strength and high yield limit. This means it can be stretched to a relatively high degree before breaking. The elasticity is preferably such that the yield limit is more than about 300%, preferably more than about 400%, more preferably more than about 550% and in particular preferably about 650% or more. Preferably this high yield limit is maintained over the temperature range during use of the heat exchanger. The yield limit can e.g. be measured according to ASTM D412.

The bonding agent can be a silicone or elastomeric based adhesive, preferably curing at about room temperature to a rubber like component which is water and gas tight. A bonding layer formed by said bonding agent is preferably pressure resistant to at least about 4 Bar, more preferably to about 10 Bar and even more preferably to about 20 Bar or above, wherein the bonding agent is preferably applied to unprimed metal of the parts. An example of such bonding agent is Dow Corning 7091, which has a normal temperature range of use between -55 and +180°C, and a yield limit of about 680%.

All kinds of combinations can be contemplated of yield limit, pressure resistance and temperature range.

Dow Corning® 7091 Adhesive/Sealant is a high-performance, neutral-cure silicone that cures at room temperature to a tough, flexible rubber, suitable for the use described herein. Dow Corning 7091 remains flexible and stable from -55° to 180°C (-67° to 356° F), and is a one-component, non-sag sealant. It can have a tear strength of 86 ppi and a tensile strength of about 363 psi. This adhesive is only provided by way of example and should not be considered limiting the scope in any way.

By using such a flexible bonding agent parts of the heat exchanger can be connected to each other, forming fluid, especially water, and gas tight seals without having to add gaskets, seals or the like, which will remain fluid and gas tight over a large temperature range. Moreover, such seals are relatively inexpensive and are pressure resistant to relatively high pressures. Furthermore, due to the high flexibility, problems with different expansion rates and directions of the different parts bonded together are avoided.

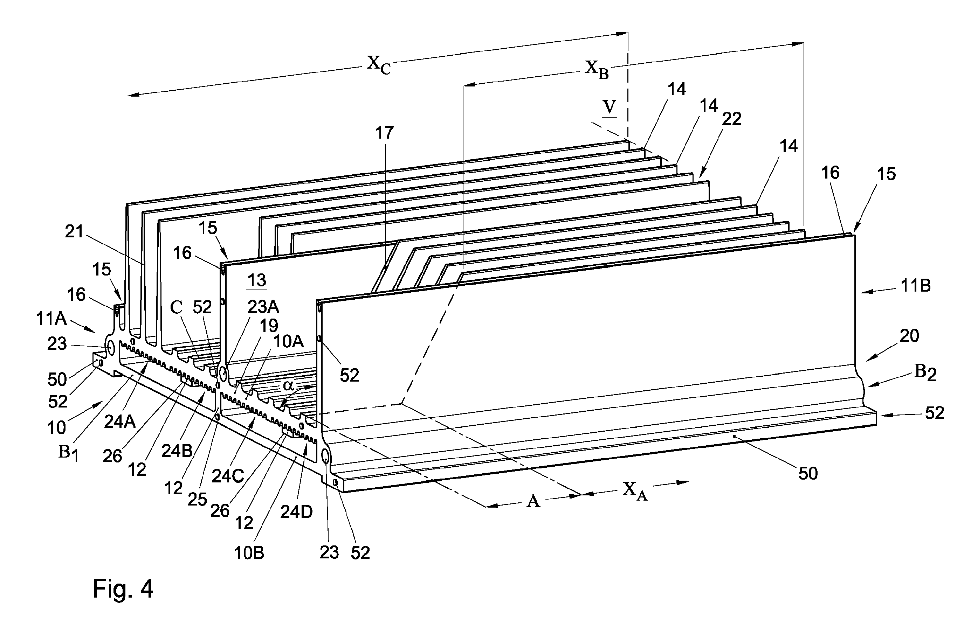

Fig. 4 shown in perspective view a first part 2. This part 2 can be made substantially be extrusion. The part 2 shows a first wall 10 and two second walls 11A, B. The first wall 10 is a substantially hollow wall, defined by a first wall part 10A and a second wall part 10B, for example extending substantially parallel to each other, whereas a number of cross walls 12 extend between the first and second wall parts 10A, 10B. The second walls 11A, B extend at an angle α to the first wall 10. The angle α differs from 180 degrees. The angle α is for example between 45 and 135 degrees and is preferably about 90 degrees. The walls 11A, B extend in a first direction from the first wall 10. One or more of the second walls 11A can be lower than at least one other wall 11B of the second walls 11. On the first side of the first wall 10 an intermediate wall 13 extends, in the same direction as the second walls 11. Between each of the second walls 11A, B and the intermediate wall 13 a series of further walls 14 is provided, extending in the same first direction from the first wall 10. As shown in fig. 4 the second walls 11, the intermediate wall 13, the cross walls 12 and the further walls 14 all have a length direction X and thus extend substantially parallel to each other. The free ends 15 of the second walls 11 and the intermediate wall 13 can have a groove 16 extending in the said length direction X, open to a side facing away from the first wall 10.

As is shown in fig. 4 to the right side of the intermediate wall 13 the further walls 14 can have a reclining end 17, such that the further walls 14 have a greater length XA near the first wall 10 than the length XB at the opposite free side 15 thereof. The opposite end 18 of the further walls 14 can be straight, such that the second ends 18 of the further walls 14 form a substantially flat plane V extending substantially perpendicular to the first wall 10, for example at a distance B from the opposite edge 20. These further walls 14 can end at a distance A from the edge 19 of the first wall 10. The intermediate wall 13 extends from the edge 19 to a distance B from the opposite edge 20 of the first wall 10. The reclining ends 17 can in an alternative also be e.g. convex or concave. The space created thereby can be narrowing in the direction of the edge 20. Obviously the reclining ends can also be substantially or partly convex of concave or have another regular or irregular shape, providing said effect of a narrowing inlet space 30, if such is desired. Otherwise they may also be substantially straight.

As is shown in fig. 4 to the left side of the intermediate wall 13 the further walls 14 can have a straight end 21, such that the further walls 14 have about the same length XC near the first wall 10 as at the opposite free side 15 thereof. The opposite end 22 of the further walls can be straight, such that the second ends 22 of the further walls 14 abut the same substantially flat plane V extending substantially perpendicular to the first wall 10. Some of the further walls 14, positioned next to the intermediate wall 13 can end at a distance C from the edge 19 of the first wall 10. The further walls 14 can extend the full length X of the first wall 10.

At two opposite outer sides of the second walls 11A, B a profile 23 is provided, having a substantially circular inner cross section. At the base of the intermediate wall 13 a further opening 23A can be provided, extending all the way through the relevant part 2, 3.

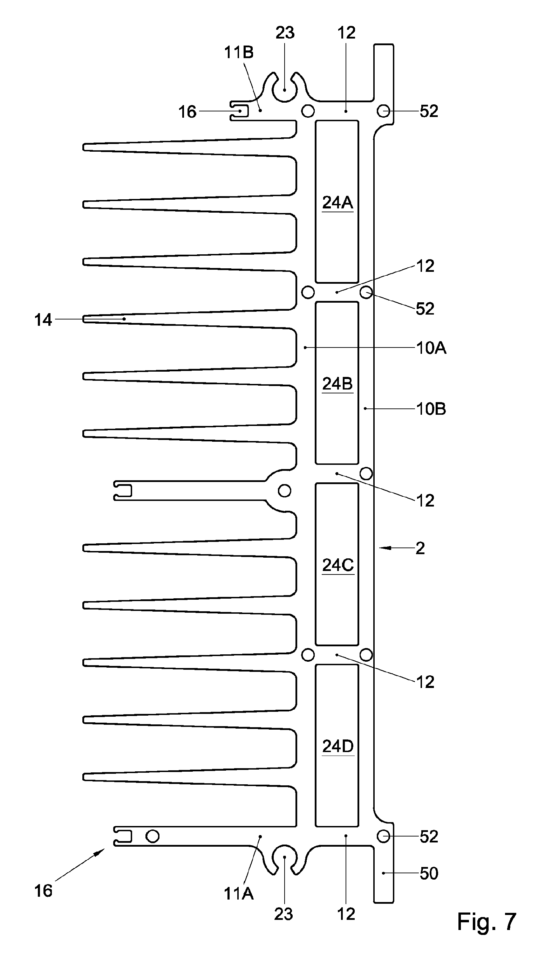

This first part 2 can be made by extruding a continuous length of profile having a cross section as for example shown in fig. 7. A desired length X₁ can be sawn off from the continuous length. Then part of the first ends 17 of the further walls 14 can be removed, for example milled or sawn off, as can the second end of the intermediate wall 13. Because of the open side of the parts this is easily accessible for such machining. In the embodiment shown five cross walls 12 are shown, dividing the space 24 within the double first wall 10 into four parallel channel parts 24A, 24B, 24C, 24D. Different numbers of channels or channel parts, which may also be referred to as sections can be used. The two middle channel parts 24B, C are connected to each other by removing part of the first end 25 of the cross wall 12 in between, whereas the left hand two channel parts 24A, 24B in fig. 4 are connected to each other by removing part of the second end 26 of the intermediate cross wall 12, adjacent the plane V. In a similar manner part of the second end 26 of the cross wall 12 between the right hand two channel parts 24C, 24D can be removed to connect these two channel parts 24C, 24D. The channel parts 24 can thus form parts or sections of a water conducting channel or duct 6.

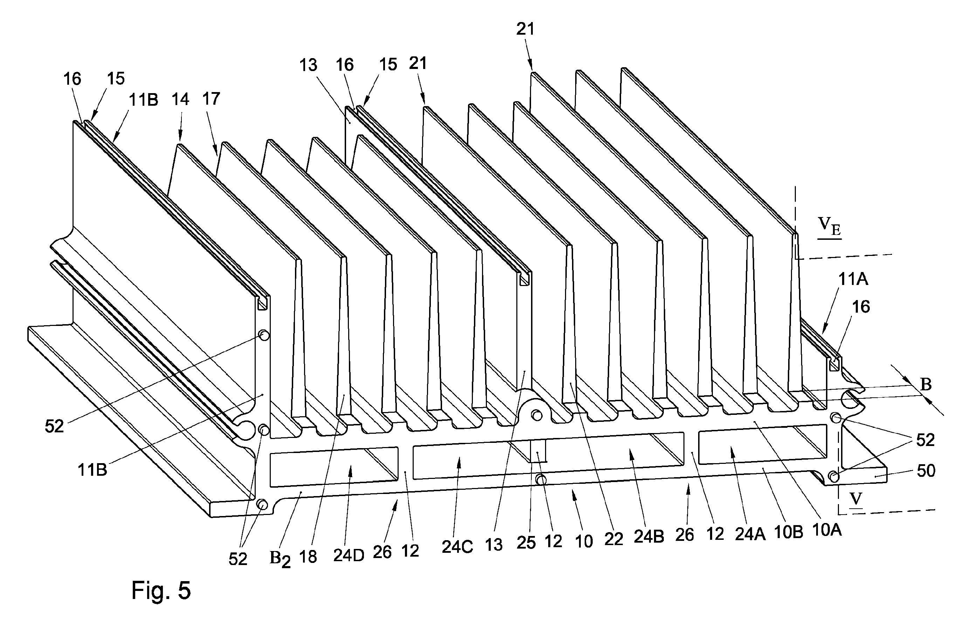

Fig 5 shows the first part 2 as shown in fig. 4, from the opposite second side. Here clearly the second ends of the further walls 14 and the second walls 11 and intermediate wall 13 can be clearly seen, forming a plane Ve, parallel to the plane V. Planes V and Ve are imaginary planes.

Between the further walls 14 and between the walls 11, 13 and adjacent further walls 14 spaces 30 A - (N) are provided, such that a substantially regular pattern can be formed. The second part 3 can be formed in a similar way.

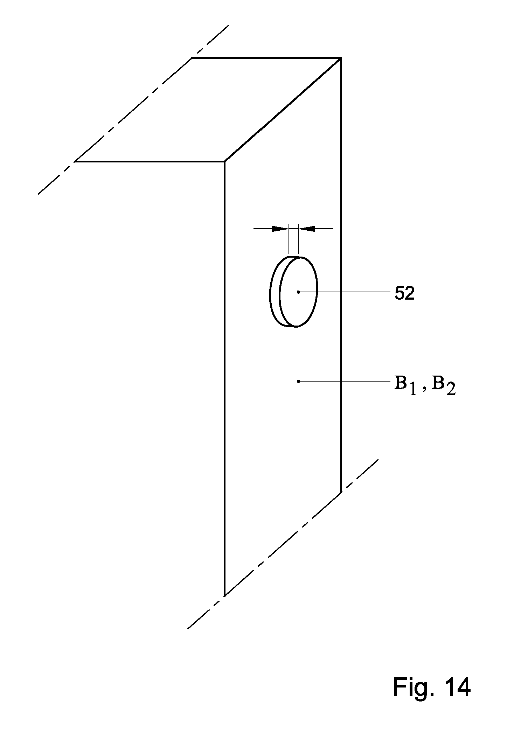

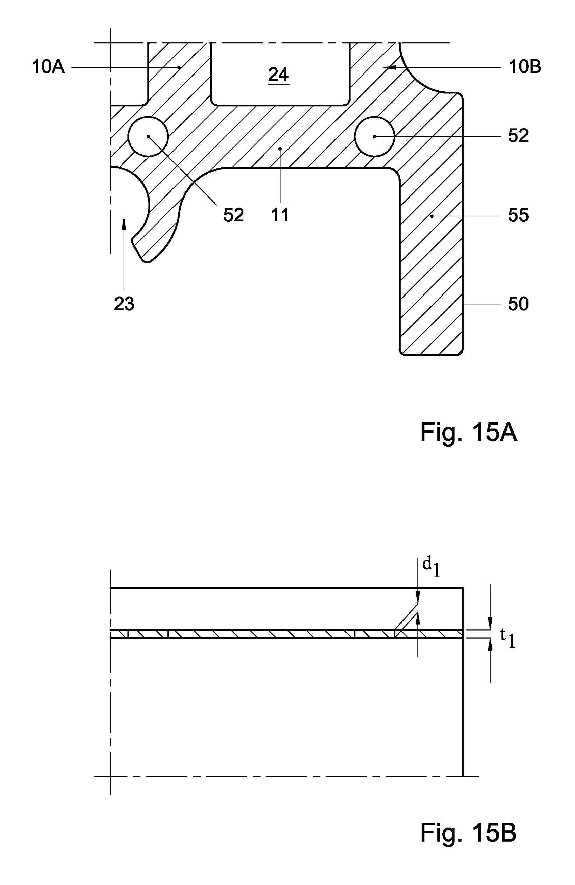

In embodiments at the free ends of the walls 10 and 11, at opposite ends seen in the length direction X_{C}, bonding surfaces B₁ and B₂ respectively can be formed. These bonding surfaces are preferably flat and even. As is schematically shown in e.g. fig. 5 - 9 and further and in larger detail shown in fig. 14 and 15, these bonding surfaces can be provided with spacer elements 52. These spacer elements 52 can be integral part of the parts 2 and/or 3 and/or of end parts 4 and/or 5. The spacer elements can be small elevations above the bonding surfaces B, which can be provided by machining of said surfaces B, for example milling. In another embodiment these spacer elements 52 can be provided in or on the surface separately and e.g. be glued or screwed in place. The spacer element extent to a relatively short distance d₁ above said bonding surface B, for defining a thickness t₁ of the bonding layer 53, as is shown in fig. 15B. In fig. 14 a perspective view of a part of a first or second part 2, 3 or of an end part 4, 5 is shown, in enlarged view, showing a substantially cylindrical spacer element 52. Obviously these spacer elements 52 can have any desired shape or form, and a height d₁ depending on the desired, optimal thickness t₁.

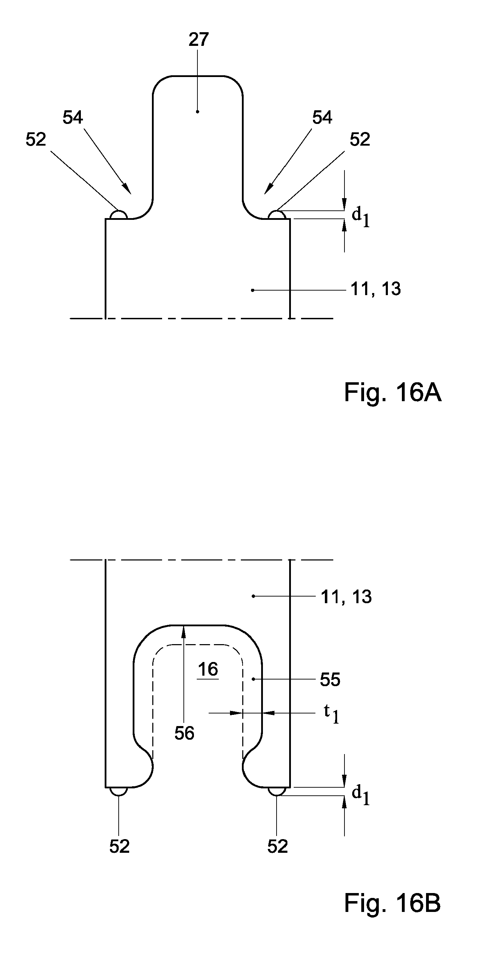

In fig. 16A shows in side view a ridge 27 on a wall 11, 13 of a second part, by way of example only, whereas to the side of said ridge 27 shoulders 54 are formed, as part of the wall 11, 13 having a larger width than the ridge 27. On each shoulder, or on only one if desired, at least one spacer element 52 is provided, again having a relatively low height d₁ above the surface of the shoulder 54. This can for example be a ridge extending over a length of said wall 11, 13, or one or more shorter elements, such as for example pins, ribs or the like. In fig. 16B such spacer elements 52 are shown on the end surface of the wall 11, to the sides of the groove 16. Again the height d₁ is relatively small. Similar elements can be provided on top of the ridge 27, to the sides thereof and/or at the bottom 56 of the groove 16. In fig. 16B the bonding layer 55 is sketched in by phantom lines, as an indication. Preferably the space between the ridge 27 and the inner wall of the groove 16 has a width t₁ similar to the height d₁ of the spacer elements 52. The

The spacer elements 52 have the advantage that they define the minimum space between two opposite bonding surfaces B of for example the first and second parts 2, 3 and/or the end parts 4, 5, thus defining the thickness t of the layer of bonding agent, and more specifically defining an even thickness thereof over the entire relevant surface B, or between the ridge 27 and the groove 16 cooperating therewith. This means that the optimal amount of glue can be used, reducing costs, whereas the best bonding and sealing can be obtained easily with the relevant bonding agent. This is obtained by at least one bonding surface B abutting the spacer elements 52 on the at least one other bonding surface it is to be bonded with, preventing it from being pressed closer to said bonding surface. The height of the spacer elements 52 above the relevant bonding surface B can be in the order of tenth's of millimetres or less, e.g. between 0.01 and 1.5 mm, preferably less than 1 mm. Obviously the height and thus the thickness of the layer can be chosen dependent on the characteristics of the bonding agent used, for optimisation. By minimizing the thickness of the layer of bonding agent 55, the transfer of heat between the parts bonded together will be maintained. Moreover, due to the fact that one of the parts will be in direct contact with the or each other part it is bonded to by the abutting contact between the bonding surface of one of said parts with spacer elements on another bonding surface it is bonded too, there will be direct metal to metal transfer of heat, which will further optimize the heat transfer.

It will be clear that in a heat exchanger according to the present disclosure also other means for connecting the parts can be used, such as welding, clamping, bolting, with or without a seal such as a packing or closure ring or similar means known in the art.

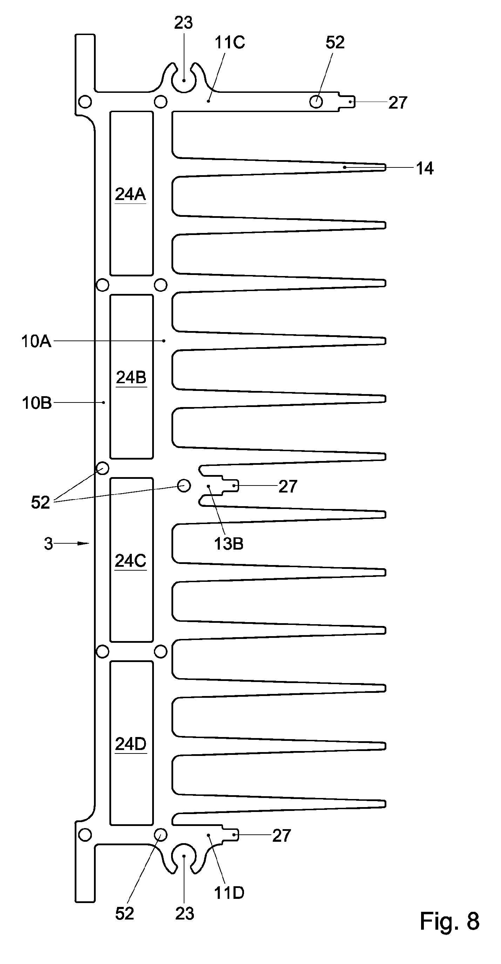

In fig. 8 a partly assembled heat exchanger 1 is shown, in side view, in which at least a first 2 and second part 3 are shown, assembled. In fig. 7 and 8 respectively the first part 2 and the second part 3 are shown, equally in side view. As can be seen the second part 3 has a cross section similar to that of the first part, but the second walls 11C, 11D and the intermediate wall 13B have heights such that when positioned on the second walls 11A, 11B and 13 respectively, the first wall 10 of the first part 2 extends parallel to the first part 10 of the second part 3, thus forming a substantially rectangular cross section. The second walls 11C, 11B and the intermediate wall 13 of the second part 3 have ridges 27 that can fit in the grooves 16. The further walls 14 of the first part 2 can extend between the further walls 14 of the second part and/or between a fin and either a second wall 11C, D or the intermediate wall 13 of the second part. The further walls 14 can have a substantially triangular or trapezoid cross section with a base 28 near the respective first wall 10 broader than the free side thereof.

As can be seen the channel parts 24 of the first walls 10 can have a ribbed or otherwise corrugated or channelled surface, at least at the side of the further walls 14, in order to increase the heat exchanging surface of the channel parts 24. Heat of the intermediate walls can be transferred to water in the channel parts 24 through the first wall 10. The heat exchanging surface increasing profile of the channel parts 24 will increase the effectiveness of this heat exchanging when water is transferred through the channel parts 24.

For all channels or ducts or parts of sections thereof, but especially for the gas channel or duct or sections thereof such heat exchanging surface increasing ridges preferably extend in the direction of flow of gas or fluid through said channel part or section, thus not forming an obstruction for linear flow. In other embodiments the walls can be free of even such elements. At least there are no such elements extending from the wall into the relevant part or section of a channel, forming an obstruction to linear flow of the gas or fluid through said section or part of a duct or channel.

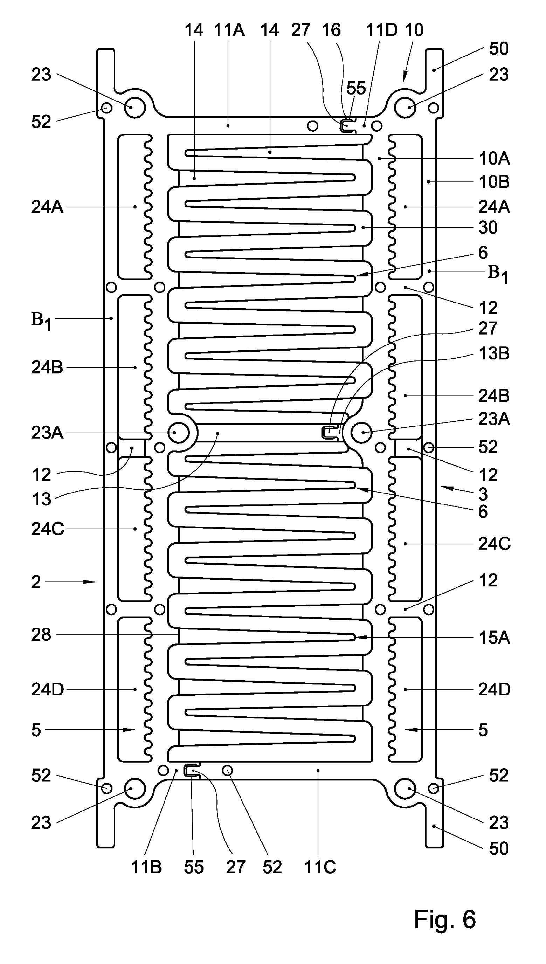

The first part 2 can be bonded to the second part 3, by bonding the second walls 11A, B of the first part 2 to the second walls 11C, D of the second parts 3. The intermediate wall 13 of the first part 2 can also be bonded to the intermediate wall 13 of the second part 3. Preferably at least the ridges 27 can be bonded in the grooves 16. Bonding can be achieved by glue, for example acrylic glue, two or more component glue, PLEXUS MA 420, PERMABOND ES 550 or DOW CORNING 7091. As can be seen in fig. 6 preferably the grooves can have an open side having a width slightly less than the adjacent part of the groove 16, whereas the ridge 27 can have a width substantially similar to the width of the open side. This means that glue in the groove 16 will be locked in the groove by forcing the ridge 27 into the groove 16, whereas the ridge 27 will be centred within the groove 16, when the opening is provided symmetrically. The space between the ridge 27 and the walls of the groove 16 is preferably similar in width to the height of the spacer elements 52, such that a layer of bonding agent can be formed between said ridge 27 and groove 16 similar in thickness as that between the bonding surfaces as discussed before.

When an embodiment of a ridge 27 and/or groove 16 is used as disclosed in fig. 14, spacer elements 52 can again be used for defining the thickness of a layer of bonding agent.

As can be seen in various figures, the spacer elements 52 can be distributed over all or some of the bonding surfaces B and/or end parts 4, 5. Preferably they can at least be provided on first walls 10 near partition walls 12 and near walls 11 and 13, as well as on the walls 11 and 13. Moreover they can be provided for example at feet 50. Preferably they are distributed such that pressure applied to the parts and, especially, the end parts 4, 5 does not significantly bend or otherwise deform any surface in between the spacer elements 52. The spacer elements 52 are preferably provided at a short distance from a or, more preferably, at a distance from each of the sides of the relevant bonding surface they are provided on. This has the advantage that the bonding agent can surround the spacer element 52 at least partly within the layer of bonding material, or at least form a continuous seal between the bonding surfaces B alongside the spacer elements, and preferably can surround the spacer elements 52 entirely, for forming both a good adhesion between the bonded parts and a good sealing. Again, the direct contact between the metal parts through the spacer elements will improve the heat transfer between parts. The relatively small thickness of the bonding layer 55 will furthermore prevent thermal isolation further. Moreover this prevents too flexible seals.

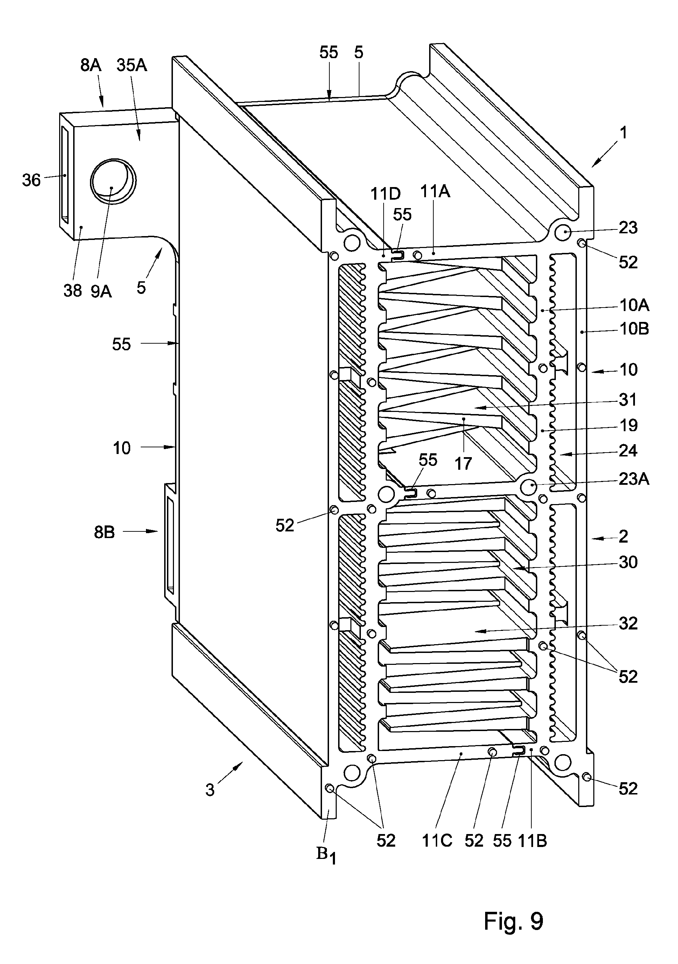

Fig. 9 shows a partly assembled heat exchanger 1, open at the first side, showing the second walls 11A, C and 11B, D bonded to each other, as well as the intermediate walls 13. Between the first walls 10 and the second walls 11 of the first and second parts 2, 3 a heat exchanging space 30 is defined, at least partly. At two opposite sides of the space 30 in the respective first wall 10 a channel 24 is provided for e.g. water. A second end part 5 is partly visible at the second side of the heat exchanger 1. At the first side the further walls 14 are visible. At one side of the intermediate walls 13 the reclining ends 17 of the further walls 14 are shown. Between the edge 19 and the ends 17 of the further walls 14 a inlet space 31 is provided. In the inlet space 31 exhaust gas from the engine or turbine 104 can be fed. The reclining ends 17 are provided to prevent undesired tension in the intermediate walls 17. At the opposite side of the intermediate walls 13 a space 32 can be provided, in order to reduce flow resistance and improve the heat exchange between heated gas flowing through the space 30 between the further walls 14 and/or the intermediate walls and the walls 11, 13.

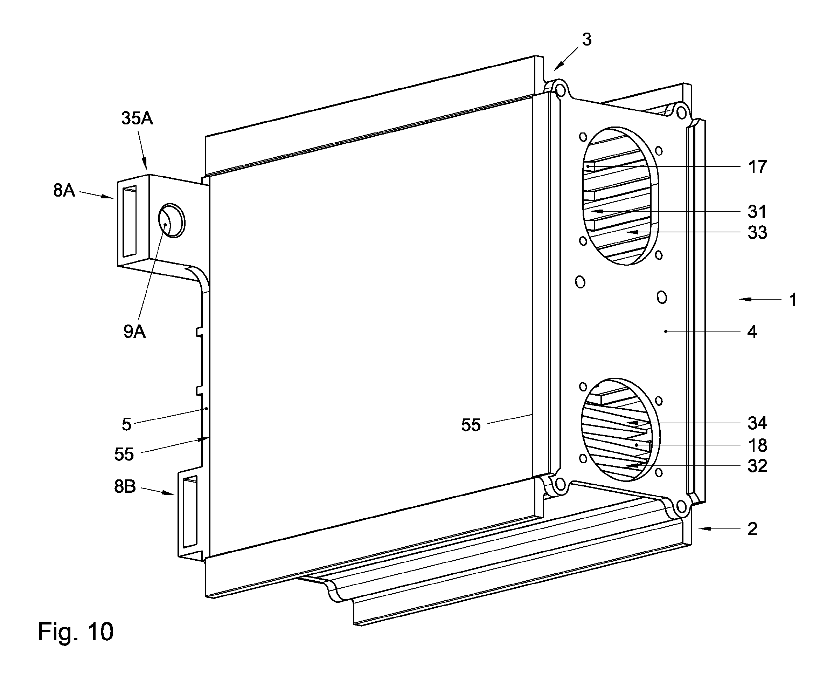

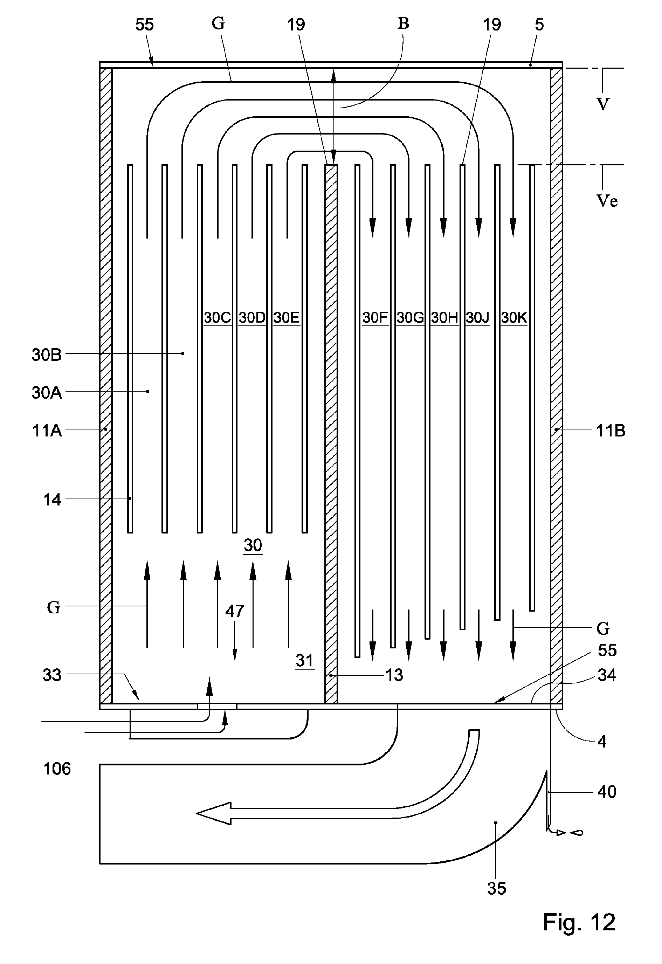

In fig. 10 a heat exchanger 1 is shown, similarly to fig. 9, but with a first end part 4 at the first side of the heat exchanger 1. The first end part 4 can be bonded, such as glued to the first and second parts 2, 3. Similarly the second end part 5 can be bonded, such as glued to the second side of the heat exchanger 1. Again spacer elements 52 can be used for defining the optimal or at least desired thickness of the layer of bonding agent. In the first end part 5 a first opening 33 is provided, opening into the inlet space 31. A second opening 34 is provided, opening into the space 32. In and/or over the first opening 33 the inlet pipe 106 can be connected, as is shown in fig. 12. In and/or over the second opening a gas exhaust 35 can be connected, as is shown in fig. 12.

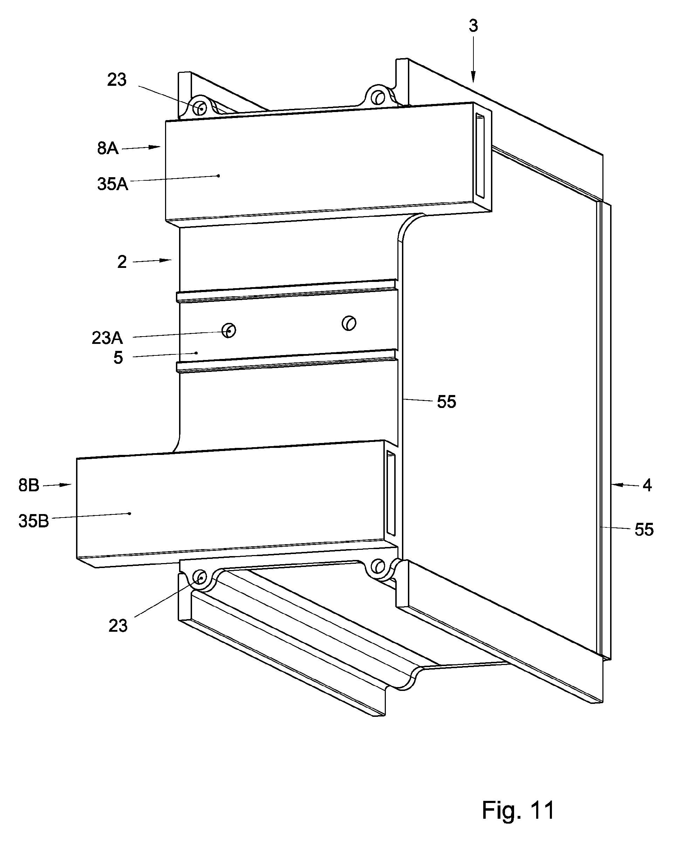

As can be seen in fig. 10 and 11 in an embodiment the channels 8A, B can extend beyond the periphery of the first and second parts 2, 3. In the embodiment of fig. 10 and 11 the channels parts 8A, B extend in opposite directions beyond the periphery. They can however also extend in the same direction. In each of the extending portions 35A, 35B an opening 9 is provided, for example by drilling or milling, preferably provided with internal screw threads or another means for attaching a pipe of a heating circuit. An inlet of a heating circuit can be connected to one of the openings 9, an outlet of the heating circuit to the other opening 9. The openings 9 are preferably provided in a wall 38 of the channels facing in the direction of the first and second part 2, 3 of the heat exchanger 1. This can provide a compact heat exchanger and easy access. The open ends 36 of the channels parts 8A, B can be closed off by stops 37, as is shown in fig. 3. The stops can also be bonded such as glued. In the wall 38 of each of the channel parts 8A, B at least one further opening 51 can be provided, opening into a channel part 24 inside a first wall 10, for fluidly connecting the channel part 24 with the channel part 8 and thus with the relevant opening 9. In the embodiments shown in fig. 3 and 10 one channel part 8A is connected to a first channel part 24A of each of the first walls 10, whereas the other channel part 8B is connected to the last channel part 24D of the first wall. In the embodiments shown this is the fourth channel part 24D but obviously other numbers of channel parts can be provided, whereas the channel parts 8A, B or further such channel parts 8 can be connected to other channel parts 24 or even to each of the channel parts 24, depending on the desired flow paths of the water through the walls 10.

The first and/or second end parts 4, 5 can basically be made by extrusion, the extrusion direction in the length direction L₈ of the channel parts 8A, B. For an embodiment of for example fig. 10 and 11 parts of the wall 38 can be removed, for example by milling or sawing, to provide for the extending portions 35A, B. Openings 9 can be provided then by for example drilling or milling. The end parts can be bonded, such as glued, to the first and second parts 2, 3. The end parts 4, 5 can be provided with further openings 39. When assembling the heat exchanger bolts or rod with ends provided with screw threads can be inserted through these openings 39 and the channels 23 or openings 23A extending there behind, after which nuts can be screwed onto the bolts or screw thread of the rods, in order to further clamp the end parts 4, 5 to the first and second parts 2, 3. This can provide for further mechanical strength.

In fig. 12 schematically a gas flow path is shown, through the inner space 30 of a heat exchanger 1, between the inlet space 31 and the exhaust 35. As can be seen exhaust gas from the engine or turbine can flow, as indicated by arrows G from the inlet space 31, into the spaces 30A - (N) between the further walls 14 and/or intermediate walls 13 and adjacent walls 11, 13. At the second side opposite the inlet space 31 the gas can flow between the end part 5 and the end 19 of the intermediate wall 13, in to the spaces between the further walls 14 in the space between the second end part 5 and the exhaust 35. From there the gasses can flow into the exhaust 35 to be expelled. A condensate drain 40 can be provided in or next to the exhaust 35.

In a CHP of the present disclosure the main direction of flow of gas and/or water in the heat exchanger can be in a substantially horizontal plane. This allows for a compact design of the unit 100 without increasing problems with contamination. The positioning may be chosen such that there is a slight angle towards the exhaust 35, for draining condensate from the gas duct 6.

As can be seen in fig. 12 in this embodiment the length of the further walls 14 in the space between the second end part 5 and the exhaust can vary, such that the intermediate walls closest to the intermediate wall 13 are longer then intermediate walls closer to the second wall 11B and the space 32 has a substantially trapezoid shape. This can have the advantage that all gasses flowing through the space 30 have about the same contact with intermediate walls, independent of their flow path.

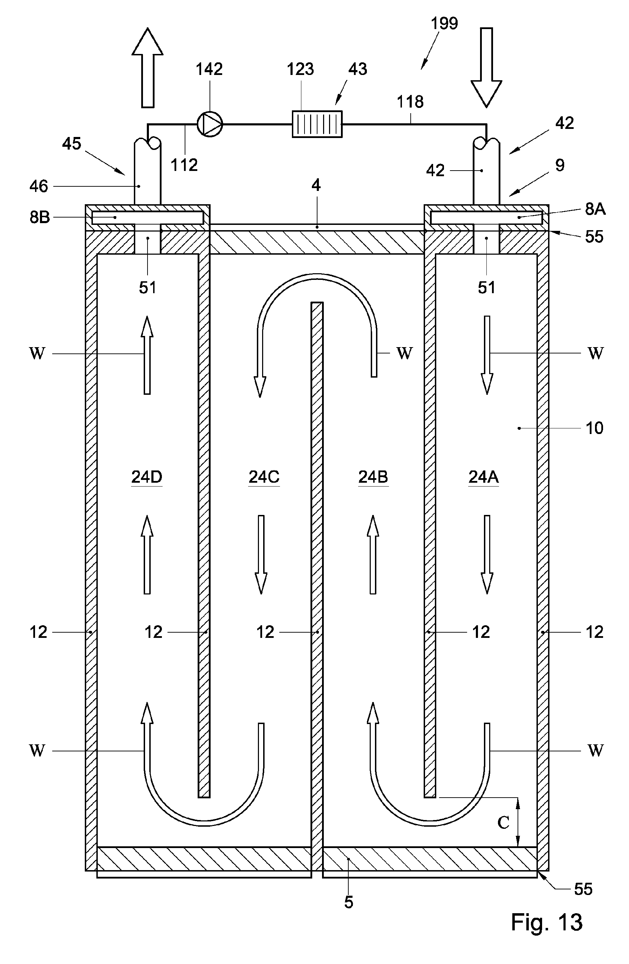

In fig. 13 schematically a water flow path is shown through the first walls 10 and the channel parts 8A, B. In this embodiment water is provided to the heat exchanger 1 through an inlet 41 into the channel part 8A. The inlet 41 is shown as comprising a pipe 42 extending from a heating circuit 123, schematically shown in fig. 13 without for example the containers 111, 131 and the additional boiler 135, and shown as having a pump 142 and a radiator 45, and connected to the relevant opening 9 by the pipe 118. In other embodiments this can for example be a household water or sanitary water supply, a boiler, or other means using heated water or other heated fluids or gasses. The water flowing from the inlet 9A, 41 flows into the channel part 8A and is divided over both channels 24 in the respective first and second part 2, 3. In fig. 13 only one of these channels 24 is shown. The water then flows through the channel parts 24 A - D, along the cross walls 12, to the other 8B of the two channel parts 8 as is shown by arrows W, through which the water from both channels 24 can flow into an outlet 9B, 45, here shown as a pipe 46 connected to the heating circuit 43 through pipe 112.Thus heat can be exchanged between the exhaust gasses flowing through the space 30, especially the gas duct or ducts 7 and the intermediate walls and walls, especially walls 13 and 10, which heat can then be transferred to water or other medium flowing through the channels 24, to be used in the heating circuit 199, 123. The flow through the channels 24 and the space 30 if preferably such that water and gas have counter flow directions as much as possible. This can for example be obtained by positioning the inlet 41 in the second end part 5 at the exhaust 35 side of the intermediate wall 13, the outlet 45 being provided on the opposite side of the intermediate wall 13, in the second end part 5.

As will be understood the bonding agent such as glue used for bonding different parts of the heat exchanger 1 to each other preferably provides a sealing between these parts too, which provides for a water and gas tight connection without the necessity of further sealing means such as seals. In other embodiments sealing of at least some of the parts relative to each other can be obtained through other means, such as seals, gaskets or the like sealing means. By using an elastic bonding agent for connecting and sealing parts of the heat exchanger, the surprising advantage is obtained of lower cost, and better sealing than when a hard or hardening agent is used. Moreover, due to the bonding, especially in combination with spacer elements, the connection can be made strong and gas and fluid tight, as well as pressure resistant.

A heat exchanger 1 according to the present invention is relatively easy to produce, is economical in comparison to heat exchangers having the same capacity made by for example moulding or welding, and can easily be adapted for for example different capacities, set up such as amendment of the position of the inlet and/or outlet 41, 45, the inlet 31 and the layout of the channels 24 and further walls 14. Moreover, a range of heat exchangers 1 can be provided, differing basically only in the length X₁ of the first and second part 2, 3. These different heat exchangers will have different capacities, depending on and mainly in relation to the length X₁. This means that with the same extrusion tools different heat exchangers can be made, reducing production costs.

The first and/or second part 2, 3 can be provided with flanges 50 for supporting the heat exchanger.

In embodiments the heat exchanger can comprise a body, preferably a mono-block body closed by end parts, the body having been extruded and comprising the or each flue duct and the or each fluid duct.

The walls defining the or each gas duct or channel or part or section thereof, made by extrusion, preferably has a very low surface roughness, which mat be as low as about 1 Ra or less, for example about 0.8 Ra or less. Such surface roughness is preferably obtained substantially without machining after extrusion. As indicated each flue duct and/or fluid duct can comprise a series of parallel sections, meaning that these sections has substantially parallel main directions of flow. These may be alternatingly in opposite directions or at least one series of such sections can have a same direction of flow, opposite to the direction of flow of at least one series of such sections. The at least one flue duct is preferably straight or has parallel sections which are straight, wherein a flow direction of gas through said at least one flue duct or said parallel sections thereof is parallel to a extrusion direction of said duct or duct section.

In at least one outer wall of the or each flue duct 7 at least one closable opening can be provided for inspecting and/or cleaning the duct or relevant parts thereof. Since the duct is free of obstructing elements such cleaning is easily possible.

A heat exchanger 1 according to this description can be used as a "stand alone" heat exchanger, for supplying heated medium such as water. In another embodiment the heat exchanger can be used as a "add on" heat exchanger, for example coupled to other heating or power generating means, such as heating devices using "green" energy, electrics, natural gas or the like. Also a number of these heat exchangers can be connected, such that depending on heat demand one or more of these heat exchangers can be fired up to provide heat.

The invention is by no means limited to the embodiments as shown and/or described in this description. Many variations thereof are possible within the scope of the claims, including at least all combinations of parts and elements of the embodiments and parts thereof shown, in any combination or permutation. For example one or both of the walls 10 can be made having separate channel parts above or next to each other for connecting to separate water or other medium circuits. Moreover the first and/or second parts can have other cross sections and can for example have reclining second walls, for providing a larger space 30. The parts can be attached to each other using different means, such as screws, fasteners, clamps, welds or the like. Also other bonding agents can be used, for example two or more component agents. Moreover, the even thickness of the bonding layers and heat conducting properties through the connection thus formed can be achieved in another way, for example by gluing tools and moulds used for exact positioning of the parts during bonding, and/or by providing heat conducting elements connected to both parts, such as but not limited to pins, strips or similar, preferably metal elements inserted in between the bonded parts or to them, crossing said bonding connection. In other embodiments a first part 2 can be used having second walls 11 and intermediate walls 13 extending from both sides of the first wall 10, as well as further walls 14, whereas two second parts 3 can be provided at the two opposite sides of the first part 2, providing a space 30 to each side of the first wall 10 of the first part 2. These spaces 30 and the water channels 24 of the different parts 2, 3 can be used for the same or different heating circuits. Shapes and dimensions, as well as positions of the different parts can be changed within the scope of the claims as pending. Moreover, more or less channel parts 8, 30, 24 can be provided than shown, whereas more than one intermediate wall can be provided, for example two or more, in each of the first and second parts 2, 3, whereas the channel parts, burner and exhaust can be provided in different positions. These and other alterations and modifications are supposed to be disclosed within the scope of the claims.

## Claims

1. Combined Heat and Power (CHP) system, comprising an engine or turbine, a generator and a heat exchanger, wherein the heat exchanger has at least one flue duct in fluid communication with an exhaust of the engine or turbine and at least one fluid duct, the heat exchanger arranged for exchange of heat between flue gasses flowing through the at least one flue duct and a fluid flowing through said at least one fluid duct, wherein the at least one flue duct is formed by at least extrusion.

2. CHP system according to claim 1, wherein the heat exchanger is made using extrusion technology and wherein at least the flue duct or ducts and the water duct or ducts are made in light metal, especially aluminium or an aluminium blend.

3. CHP system according to claim 1 or 2, wherein the flue duct is defined by flue duct defining walls which have a surface roughness of less than about 25Ra, preferably less than 12.5Ra, more preferably less than 6Ra, even more preferably less than 2Ra.

4. CHP system according to claim 3, wherein the roughness is less than 1Ra, preferably about 0.8Ra or less.

5. CHP system according to any one of claims 1 - 4, wherein the at least one flue duct has flue duct defining walls which are, seen in a flow direction of the duct, free of obstructions such as heat exchanging surface increasing elements.

6. CHP system according to any one of claims 1 - 5, wherein the at least one flue duct comprises a series of parallel duct sections, fluidly connected to each other for forming a zig-zag flue path, wherein each of the sections, seen in a flow direction of gas through the relevant section, is free of obstructions such as heat exchanging surface increasing elements.

7. CHP system according to any one of the previous claims, wherein the at least one flue duct is straight or has parallel sections which are straight, wherein a flow direction of gas through said at least one flue duct or said parallel sections thereof is parallel to a extrusion direction of said duct or duct section.

8. CHP system according to any one of the previous claims, wherein the heat exchanger is provided with at least one closable opening into said at least one flue duct, for cleaning of the flue duct.

9. CHP system according to any one of the previous claims, wherein the heat exchanger comprises a body made by extrusion, including said at least one flue duct and said at least one fluid duct, and wherein opposite ends of the body are closed by end elements, which are preferably glued to the body.

10. CHP system according to any one of the previous claims, wherein the heat exchanger comprises at least two parts made at least partly by extrusion from light metal or light metal alloy, said at least two parts mutually engaging for forming part of a heat exchanging space formed by or comprising said at least one flue duct and/or a water conducting channel formed by or comprising said at least one fluid duct, wherein each of said at least two parts comprises part of said heat exchanging space and/or said water conducting channel, wherein said at least two parts are connected by an elastic bonding agent, in particular an elastic glue, forming a bond and a seal.

11. CHP system according to any one of the previous claims, wherein the CHP further comprises a cooling circuit for the engine or turbine, which circuit includes a second heat exchanger, which has a fluid duct connected in or to a fluid circuit including the at least one fluid duct of the first heat exchanger, such that during use heat can be transferred from the cooling fluid of the engine to the fluid flowing through the circuit including the said fluid duct of the first heat exchanger.

12. CHP system according to any one of the previous claims, wherein the at least one flue duct or parallel sections of the flue duct(s) has/have straight duct forming walls and substantially rectangular cross sections perpendicular to a direction of flow through said duct or section.

13. CHP system according to any one of the previous claims, wherein the flue duct or parallel sections of the flue duct extend in a direction of extrusion of the heat exchanger, and are free from flow obstructions and heat exchanging surface increasing elements extending into the duct or section as such obstruction.

14. CHP system according to any one of the previous claims, wherein the heat exchanger is positioned such that the flow of flue gas through the heat exchanger is substantially horizontally.

15. CHP system according to any one of the previous claims, wherein the system further comprises at least one of:
- at least one and preferably at least two containers for holding water heated by the said heat exchanger or heat exchangers;
- at least one heating circuit for special heating;
- at least one additional heating boiler for heating fluid, especially water; and
- a controller for at least the engine or turbine, the generator and a pump in a fluid circuit connected to the at least one fluid duct.
